(19) **Europäisches Patentamt / European Patent Office / Office européen des brevets**

(11) **EP 3 873 095 A1**

(12) **EUROPEAN PATENT APPLICATION**

(43) Date of publication:
01.09.2021 Bulletin 2021/35

(51) Int Cl.:
*H04N 19/20* (2014.01)    *H04N 19/597* (2014.01)
*H04N 19/70* (2014.01)

(21) Application number: 21156172.5

(22) Date of filing: 10.02.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.02.2020 FI 20205200

(71) Applicant: Nokia Technologies Oy
02610 Espoo (FI)

(72) Inventors:
• MATE, Sujeet Shyamsundar
33720 Tampere (FI)

• KONDRAD, Lukasz
80331 Munich (DE)
• AKSU, Emre Baris
33800 Tampere (FI)
• HANNUKSELA, Miska
33610 Tampere (FI)
• CURCIO, Igor Danilo Diego
33100 Tampere (FI)

(74) Representative: Nokia EPO representatives
Nokia Technologies Oy
Karakaari 7
02610 Espoo (FI)

(54) **AN APPARATUS, A METHOD AND A COMPUTER PROGRAM FOR OMNIDIRECTIONAL VIDEO**

(57) A method comprising: generating a bitstream defining a presentation, the presentation comprising an omnidirectional visual media content; encoding, into the bitstream, information about a three-dimensional (3D) object to be included as an overlay into said omnidirectional visual media content; and signaling, in or along the bitstream, a relationship between a coordinate system of the omnidirectional visual media content and a coordinate system of the 3D object.

Generate a bitstream defining a presentation, the presentation comprising an omnidirectional visual media content (500)

↓

Encode, into the bitstream, information about a 3D object to be included as an overlay into said omnidirectional visual media content (502)

↓

Signal a relationship between a coordinate system of the omnidirectional visual media content and a coordinate system of the 3D object (504)

Fig. 5

EP 3 873 095 A1

**Description**

## TECHNICAL FIELD

The present invention relates to an apparatus, a method and a computer program for omnidirectional video coding.

## BACKGROUND

3D camera devices are able to capture visual and audio content around the whole angular field of view, sometimes referred to as 360 degrees field of view. A subsection (i.e. a viewport) of such omnidirectional content may be viewed by head-mounted displays (HMD), and other devices allowing a person to see a portion of the 360-degree visual content. The MPEG Omnidirectional Media Format (OMAF; ISO/IEC 23090-2) provides definitions for omnidirectional streaming of single 3DoF (3 Degrees of Freedom) content, where the viewer is located at the centre of a unit sphere and has three degrees of freedom (Yaw-Pitch-Roll) for adjusting the viewport.

The OMAF specification includes definitions for background and foreground objects and it also supports including object overlays (foreground objects) into the omnidirectional content (background), but the visual overlays may only be included as 2D rectilinear content. For example, when viewing 3D content using an HMD, OMAF enables overlay content rendering to respond to user's head motion (translation along X-axis, Y-axis and Z-axis).

There are various technologies to render 3D objects. For example, an object may be represented by volumetric video data, which may describe the geometry, e.g. shape, size, position in 3D space, and respective attributes, e.g. colour, opacity, reflectance and any possible temporal changes of the geometry and attributes at given time instances. Typical representation formats for such volumetric data are triangle meshes, point clouds (PCs), or voxel arrays. For example, MPEG Video-Based Point Cloud Coding (V-PCC) provides a procedure for compressing a time-varying volumetric scene/object by projecting 3D surfaces onto a number of pre-defined 2D planes, which may then be compressed using regular 2D video compression algorithms. V-PCC provides for efficient delivery of a compressed 3D point cloud object which can be viewed with six degrees of freedom (6DoF).

3D objects with six degrees of freedom (6DoF) properties, such as a V-PCC object, would be better suited for object overlays into the omnidirectional content than 2D rectilinear content. Nevertheless, there is no support to have V-PCC or any 3D objects to be incorporated in the OMAF content representation.

## SUMMARY

Now, an improved method and technical equipment implementing the method has been invented, by which the above problems are alleviated. Various aspects include a method, an apparatus and a computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided a method comprising generating a bitstream defining a presentation, the presentation comprising an omnidirectional visual media content; encoding, into the bitstream, information about a three-dimensional (3D) object to be included as an overlay into said omnidirectional visual media content; and signaling, in or along the bitstream, a relationship between a coordinate system of the omnidirectional visual media content and a coordinate system of the 3D object.

An apparatus according to a second aspect comprises at least one processor and at least one memory, said at least one memory stored with computer program code thereon, the at least one memory and the computer program code configured to, with the at least one processor, cause the apparatus at least to perform: generate a bitstream defining a presentation, the presentation comprising an omnidirectional visual media content; encode, into the bitstream, information about a three-dimensional (3D) object to be included as an overlay into said omnidirectional visual media content; and signal, in or along the bitstream, a relationship between a coordinate system of the omnidirectional visual media content and a coordinate system of the 3D object.

An apparatus according to a third aspect comprises means for generating a bitstream defining a presentation, the presentation comprising an omnidirectional visual media content; means for encoding, into the bitstream, information about a three-dimensional (3D) object to be included as an overlay into said omnidirectional visual media content; and means for signaling, in or along the bitstream, a relationship between a coordinate system of the omnidirectional visual media content and a coordinate system of the 3D object.

According to an embodiment, said relationship is configured to be determined as a mapping of an up and a front direction of the coordinate system of the 3D object to an up and a front direction of the coordinate system of the omnidirectional visual media content.

According to an embodiment, said relationship is configured to be determined as a mapping of a pivot point of the 3D object to the coordinate system of the omnidirectional visual media content.

According to an embodiment, said signaling is configured to be provided in at least one control structure of overlay control structures for the omnidirectional visual media content.

According to an embodiment, the apparatus is further configured to signal, along a container associated with the 3D object, that said 3D object is intended as an overlay into said omnidirectional visual media content, wherein signaling comprises at least an identification of source media and rendering properties of the overlay.

According to an embodiment, said signalling is static metadata of the overlay in a track associated with the 3D object.

According to an embodiment, said signalling is static metadata of the overlay in an item associated with the 3D object.

According to an embodiment, said signalling is dynamic metadata of the overlay in a track reference pointing to one or more tracks associated with the 3D object.

According to an embodiment, said omnidirectional visual media content is generated according to Omnidirectional Media Format (OMAF) and the 3D object is encoded according to Video-Based Point Cloud Coding (V-PCC).

A method according to a fourth aspect comprises receiving a bitstream in a decoder, said bitstream comprising an encoded presentation of an omnidirectional visual media content; decoding, from the bitstream, information about a three-dimensional (3D) object to be included as an overlay into said omnidirectional visual media content; obtaining, from or along the bitstream, signaling indicating a relationship between a coordinate system of the omnidirectional visual media content and a coordinate system of the 3D object; and rendering said omnidirectional visual media content and the 3D object as an overlay thereto according to the relationship between the coordinate system of the omnidirectional visual media content and the coordinate system of the 3D object.

An apparatus according to a fifth aspect comprises at least one processor and at least one memory, said at least one memory stored with computer program code thereon, the at least one memory and the computer program code configured to, with the at least one processor, cause the apparatus at least to perform: receive a bitstream in a decoder, said bitstream comprising an encoded presentation of an omnidirectional visual media content; decode, from the bitstream, information about a three-dimensional (3D) object to be included as an overlay into said omnidirectional visual media content; obtain, from or along the bitstream, signaling indicating a relationship between a coordinate system of the omnidirectional visual media content and a coordinate system of the 3D object; and render said omnidirectional visual media content and the 3D object as an overlay thereto according to the relationship between the coordinate system of the omnidirectional visual media content and the coordinate system of the 3D object.

An apparatus according to a sixth aspect comprises means for receiving a bitstream in a decoder, said bitstream comprising an encoded presentation of an omnidirectional visual media content; means for decoding, from the bitstream, information about a three-dimensional (3D) object to be included as an overlay into said omnidirectional visual media content; means for obtaining, from or along the bitstream, signaling indicating a relationship between a coordinate system of the omnidirectional visual media content and a coordinate system of the 3D object; and means for rendering said omnidirectional visual media content and the 3D object as an overlay thereto according to the relationship between the coordinate system of the omnidirectional visual media content and the coordinate system of the 3D object.

Computer readable storage media according to further aspects comprise code for use by an apparatus, which when executed by a processor, causes the apparatus to perform the above methods.

## BRIEF DESCRIPTION OF THE DRAWINGS

For a more complete understanding of the example embodiments, reference is now made to the following descriptions taken in connection with the accompanying drawings in which:

Fig. 1 shows an encoder and decoder for encoding and decoding omnidirectional video content according to OMAF standard;

Figs. 2a and 2b show a compression and a decompression process for 3D volumetric video;

Figs. 3a and 3b show an example of a point cloud frame and a projection of points to a corresponding plane of a point cloud bounding box;

Fig. 4 shows some examples relating to overlays;

Fig. 5 shows a flow chart for signaling overlay content according to an embodiment;

Fig. 6 shows a flow chart for decoding overlay content onto omnidirectional visual media content according to an embodiment;

Fig. 7 illustrates the difference between the coordinate system of a point cloud compressed (PCC) object and the OMAF coordinate system;

Figs. 8a and 8b show embodiments relating to mapping of an up and a front direction of the coordinate system of the 3D object to an up and a front direction of the coordinate system of the omnidirectional visual media content; and

Figs. 9a and 9b show some embodiments relating to mapping of a pivot point of the 3D object to the coordinate system of the omnidirectional visual media content.

## DETAILED DESCRIPTON OF SOME EXAMPLE EMBODIMENTS

In the following, several embodiments of the invention will be described in the context of omnidirectional video coding and point cloud compressed (PCC) objects as overlays therein. It is to be noted, however, that the invention is not limited to PCC objects. In fact, the different embodiments have applications in any environment where any 3D objects are included as overlays in omnidirectional video content.

In contrast to traditional 2D cameras enabling to capture a relatively narrow field of view, three-dimensional (3D) cameras are able to capture visual and audio content all around them, i.e. they can capture the whole angular field of view, sometimes referred to as 360 degrees field of view. More precisely, they can capture a spherical field of view (i.e., 360 degrees in all spatial directions). Furthermore, new types of output devices, such as head-mounted displays (HMD), and other devices, allow a person to see the 360-degree visual content.

Available media file format standards include International Standards Organization (ISO) base media file format (ISO/IEC 14496-12, which may be abbreviated ISOBMFF), Moving Picture Experts Group (MPEG)-4 file format (ISO/IEC 14496-14, also known as the MP4 format), file format for NAL (Network Abstraction Layer) unit structured video (ISO/IEC 14496-15) and High Efficiency Video Coding standard (HEVC or H.265/HEVC).

Some concepts, structures, and specifications of ISOBMFF are described below as an example of a container file format, based on which the embodiments may be implemented. The aspects of the invention are not limited to ISOBMFF, but rather the description is given for one possible basis on top of which the invention may be partly or fully realized.

In the following, term "omnidirectional" may refer to media content that may have greater spatial extent than a field-of-view of a device rendering the content. Omnidirectional content may for example cover substantially 360 degrees in the horizontal dimension and substantially 180 degrees in the vertical dimension, but omnidirectional may also refer to content covering less than 360 degree-view in the horizontal direction and/or 180 degree-view in the vertical direction.

A panoramic image covering a 360-degree field-of-view horizontally and a 180-degree field-of-view vertically can be represented by a sphere that has been mapped to a two-dimensional image plane using the equirectangular projection (ERP). In this case, the horizontal coordinate may be considered equivalent to a longitude, and the vertical coordinate may be considered equivalent to a latitude, with no transformation or scaling applied. In some cases, panoramic content with a 360-degree horizontal field-of-view, but with less than a 180-degree vertical field-of-view may be considered special cases of equirectangular projection, where the polar areas of the sphere have not been mapped onto the two-dimensional image plane. In some cases, panoramic content may have less than a 360-degree horizontal field-of-view and up to a 180-degree vertical field-of-view, while otherwise having the characteristics of an equirectangular projection format.

Immersive multimedia, such as omnidirectional content consumption is more complex for the end user compared to the consumption of 2D content. This is due to the higher degree of freedom available to the end user. The freedom also results in more uncertainty. The MPEG Omnidirectional Media Format (OMAF; ISO/IEC 23090-2) v1 standardized the omnidirectional streaming of single 3DoF (3 Degrees of Freedom) content (where the viewer is located at the centre of a unit sphere and has three degrees of freedom (Yaw-Pitch-Roll). The following phase standardization OMAFv2 is expected to enable multiple 3DoF and 3DoF+ content consumption with user interaction and means to optimize the Viewport Dependent Streaming (VDS) operations and bandwidth management.

A viewport may be defined as a region of omnidirectional image or video suitable for display and viewing by the user. A current viewport (which may be sometimes referred simply as a viewport) may be defined as the part of the spherical video that is currently displayed and hence is viewable by the user(s). At any point of time, a video rendered by an application on a head-mounted display (HMD) renders a portion of the 360-degrees video, which is referred to as a viewport. Likewise, when viewing a spatial part of the 360-degree content on a conventional display, the spatial part that is currently displayed is a viewport. A viewport is a window on the 360-degree world represented in the omnidirectional video displayed via a rendering display. A viewport may be characterized by a horizontal field-of-view (VHFoV) and a vertical field-of-view (VVFoV).

The 360-degree space may be divided into a discrete set of viewports, each separated by a given distance (e.g., expressed in degrees), so that the omnidirectional space can be imagined as a map of overlapping viewports, and the viewport is switched discretely as the user changes his/her orientation while watching content with a head-mounted display (HMD). When the overlapping between viewports is reduced to zero, the viewports can be imagined as adjacent non-overlapping tiles within the 360-degrees space.

When streaming VR video, a subset of 360-degree video content covering the viewport (i.e., the current view orientation) may be transmitted at the best quality/resolution, while the remaining of 360-degree video may be transmitted at a lower quality/resolution. This is what characterizes a VDS systems, as opposed to a Viewport Independent Streaming system, where the omnidirectional video is streamed at high quality in all directions.

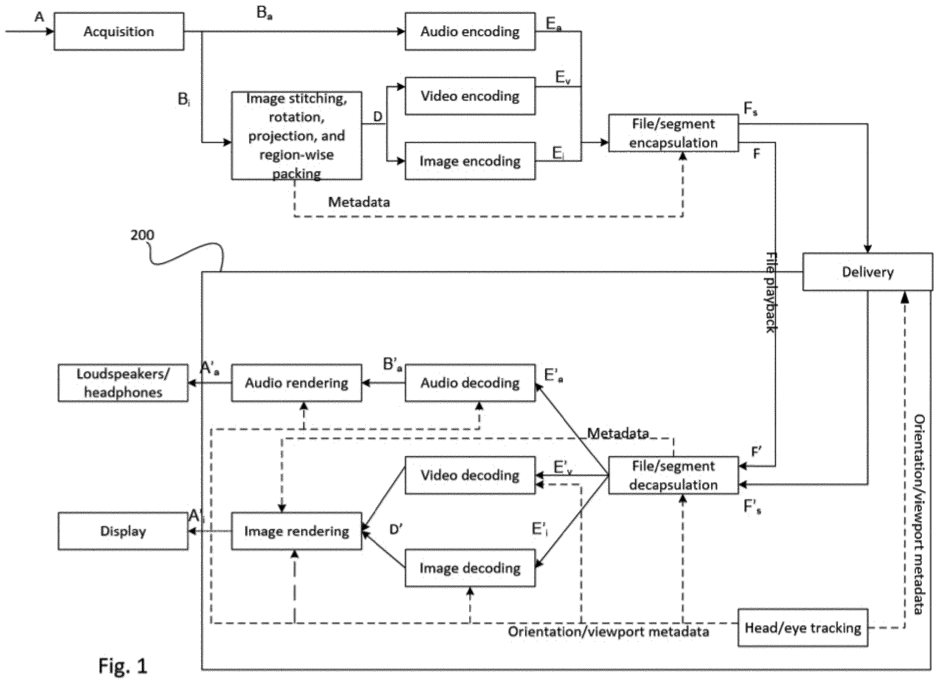

Figure 1 illustrates the OMAF system architecture. The system can be situated in a video camera, or in a network server, for example. As shown in Figure 1, an omnidirectional media (A) is acquired. If the OMAF system is part of the video source, the omnidirectional media (A) is acquired from the camera means. If the OMAF system is in a network server, the omnidirectional media (A) is acquired from a video source over network.

The omnidirectional media comprises image data (Bi) and audio data (Ba), which are processed separately. In image stitching, rotation, projection and region-wise packing, the images/video of the source media and provided as input (Bi) are stitched to generate a sphere picture on a unit sphere per the global coordinate axes. The unit sphere is then rotated relative to the global coordinate axes. The amount of rotation to convert from the local coordinate axes to the global coordinate axes may be specified by the rotation angles indicated in a RotationBox. The local coordinate axes of the unit sphere are the axes of the coordinate system that has been rotated. The absence of the RotationBox indicates that the local coordinate axes are the same as the global coordinate axes. Then, the spherical picture on the rotated unit sphere is converted to a two-dimensional projected picture, for example using the equirectangular projection. When spatial packing of stereoscopic content is applied, two spherical pictures for the two views are converted to two constituent pictures, after which frame packing is applied to pack the two constituent picture on one projected picture. Rectangular region-wise packing can then be applied to obtain a packed picture from the projected picture. The packed pictures (D) are then provided for video and image encoding to result in encoded image (Ei) and/or encoded video stream (Ev). The audio of the source media is provided as input (Ba) to audio encoding that provides as an encoded audio (Ea).The encoded data (Ei, Ev, Ea) are then encapsulated into file for playback (F) and delivery (i.e. streaming) (Fs).

In the OMAF player 200, such as in an HMD, a file decapsulator processes the files (F', F's) and extracts the coded bitstreams (E'i, E'v, E'a) and parses the metadata. The audio, video and/or images are then decoded into decoded data (D', B'a). The decoded pictures (D') are projected onto a display according to the viewport and orientation sensed by a head/eye tracking device. Similarly, the decoded audio (B'a) is rendered through loudspeakers/headphones.

Volumetric video may be captured using one or more three-dimensional (3D) cameras. When multiple cameras are in use, the captured footage is synchronized so that the cameras provide different viewpoints to the same world. In contrast to traditional 2D/3D video, volumetric video describes a 3D model of the world where the viewer is free to move and observer different parts of the world.

Volumetric video enables the viewer to move in six degrees of freedom (6DOF): in contrast to common 360° video, such as defined in OMAF, where the user has from 2 to 3 degrees of freedom (yaw, pitch, and possibly roll), a volumetric video represents a 3D volume of space rather than a flat image plane. Volumetric video frames contain a large amount of data because they model the contents of a 3D volume instead of just a two-dimensional (2D) plane. However, only a relatively small part of the volume changes over time. Therefore, it may be possible to reduce the total amount of data by only coding information about an initial state and changes which may occur between frames.

Volumetric video data represents a three-dimensional scene or object, and thus such data can be viewed from any viewpoint. Volumetric video data can be used as an input for augmented reality (AR), virtual reality (VR) and mixed reality (MR) applications. Such data describes geometry (shape, size, position in 3D-space) and respective attributes (e.g. color, opacity, reflectance, ...), together with any possible temporal changes of the geometry and attributes at given time instances (e.g. frames in 2D video). Volumetric video is either generated from 3D models, i.e. computer-generated imagery (CGI), or captured from real-world scenes using a variety of capture solutions, e.g. a multi-camera, a laser scan, a combination of video and dedicated depths sensors, such as LiDAR (Light Detection and Ranging). Also, a combination of CGI and real-world data is possible. Examples of representation formats for such volumetric data are triangle meshes, point clouds, or voxel. Temporal information about the scene can be included in the form of individual capture instances, i.e. "frames" in 2D video, or other means, e.g. position of an object as a function of time.

Increasing computational resources and advances in 3D data acquisition devices has enabled reconstruction of highly detailed volumetric video representations of natural scenes. Infrared, lasers, time-of-flight and structured light are all examples of devices that can be used to construct 3D video data. Representation of the 3D data depends on how the 3D data is used. Dense voxel arrays have been used to represent volumetric medical data. In 3D graphics, polygonal meshes are extensively used. Point clouds on the other hand are well suited for applications, such as capturing real world 3D scenes where the topology is not necessarily a 2D manifold. Another way to represent 3D data is coding this 3D data as a set of texture and depth map as is the case in the multi-view plus depth. Closely related to the techniques used in multi-view plus depth is the use of elevation maps, and multi-level surface maps.

In 3D point clouds, each point of each 3D surface is described as a 3D point with color and/or other attribute information such as surface normal or material reflectance. Point cloud is a set of data points in a coordinate system, for example in a three-dimensional coordinate system being defined by X, Y, and Z coordinates. The points may represent an external surface of an object in the screen space, e.g. in a three-dimensional space.

In dense point clouds or voxel arrays, the reconstructed 3D scene may contain tens or even hundreds of millions of points. If such representations are to be stored or interchanged between entities, then efficient compression of the presentations becomes fundamental. Standard volumetric video representation formats, such as point clouds, meshes, voxel, suffer from poor temporal compression performance. Identifying correspondences for motion-compensation in 3D-space is an ill-defined problem, as both geometry and respective attributes may change. For example, temporal successive "frames" do not necessarily have the same number of meshes, points or voxel. Therefore, compression of dynamic 3D scenes is inefficient. 2D-video based approaches for compressing volumetric data, i.e. multiview with depth, have much better compression efficiency, but rarely cover the full scene. Therefore, they provide only limited 6DOF capabilities.

Instead of the above-mentioned approach, a 3D scene, represented as meshes, points, and/or voxel, can be projected onto one, or more, geometries. These geometries may be "unfolded" or packed onto 2D planes (two planes per geometry: one for texture, one for depth), which are then encoded using standard 2D video compression technologies. Relevant projection geometry information may be transmitted alongside the encoded video files to the decoder. The decoder decodes the video and performs the inverse projection to regenerate the 3D scene in any desired representation format (not necessarily the starting format).

Projecting volumetric models onto 2D planes allows for using standard 2D video coding tools with highly efficient temporal compression. Thus, coding efficiency can be increased greatly. Using geometry-projections instead of 2D-video based approaches based on multiview and depth, provides a better coverage of the scene (or object). Thus, 6DOF capabilities are improved. Using several geometries for individual objects improves the coverage of the scene further. Furthermore, standard video encoding hardware, such as High Efficiency Video Coding (HEVC) codecs, can be utilized for real-time compression/decompression of the projected planes. The projection and the reverse projection steps are of low complexity.

A first texture picture may be encoded into a bitstream, and the first texture picture may comprise a first projection of texture data of a first source volume of a scene model onto a first projection surface. The scene model may comprise a number of further source volumes.

In the projection, data on the position of the originating geometry primitive may also be determined, and based on this determination, a geometry picture may be formed. This may happen for example so that depth data is determined for each or some of the texture pixels of the texture picture. Depth data is formed such that the distance from the originating geometry primitive such as a point to the projection surface is determined for the pixels. Such depth data may be represented as a depth picture, and similarly to the texture picture, such geometry picture (such as a depth picture) may be encoded and decoded with a video codec. This first geometry picture may be seen to represent a mapping of the first projection surface to the first source volume, and the decoder may use this information to determine the location of geometry primitives in the model to be reconstructed. In order to determine the position of the first source volume and/or the first projection surface and/or the first projection in the scene model, there may be first geometry information encoded into or along the bitstream.

The phrase along the bitstream (e.g. indicating along the bitstream) may be defined to refer to out-of-band transmission, signalling, or storage in a manner that the out-of-band data is associated with the bitstream. The phrase decoding along the bitstream or alike may refer to decoding the referred out-of-band data (which may be obtained from out-of-band transmission, signalling, or storage) that is associated with the bitstream. For example, an indication along the bitstream may refer to metadata in a container file that encapsulates the bitstream.

An attribute picture may be defined as a picture that comprises additional information related to an associated texture picture. An attribute picture may for example comprise surface normal, opacity, or reflectance information for a texture picture. A geometry picture may be regarded as one type of an attribute picture, although a geometry picture may be treated as its own picture type, separate from an attribute picture.

Texture picture(s) and the respective geometry picture(s), if any, and the respective attribute picture(s) may have the same or different chroma format.

Terms texture image, texture picture and texture component picture may be used interchangeably. Terms geometry image, geometry picture and geometry component picture may be used interchangeably. A specific type of a geometry image is a depth image. Embodiments described in relation to a geometry image equally apply to a depth image, and embodiments described in relation to a depth image equally apply to a geometry image. Terms attribute image, attribute picture and attribute component picture may be used interchangeably. A geometry picture and/or an attribute picture may be treated as an auxiliary picture in video/image encoding and/or decoding.

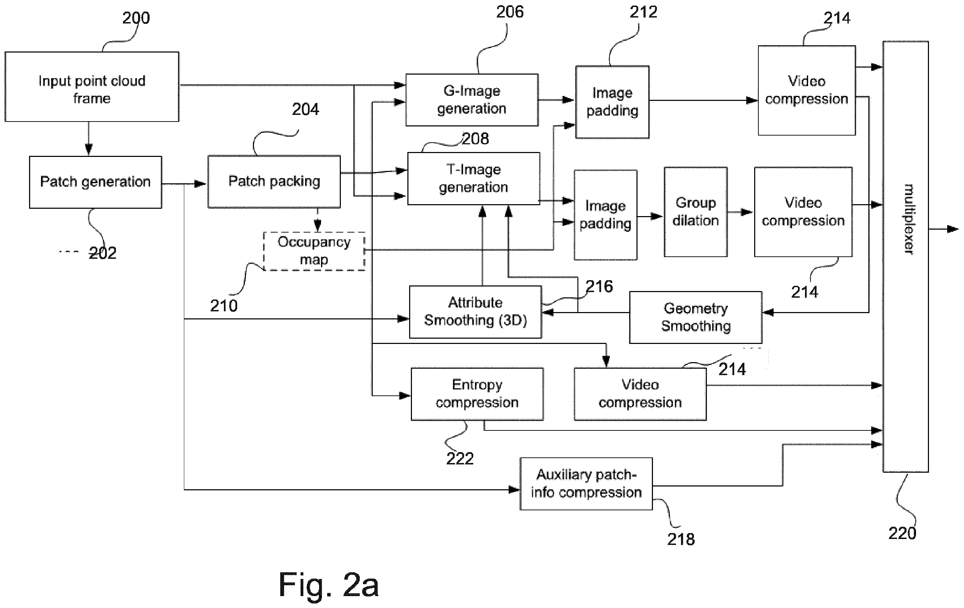

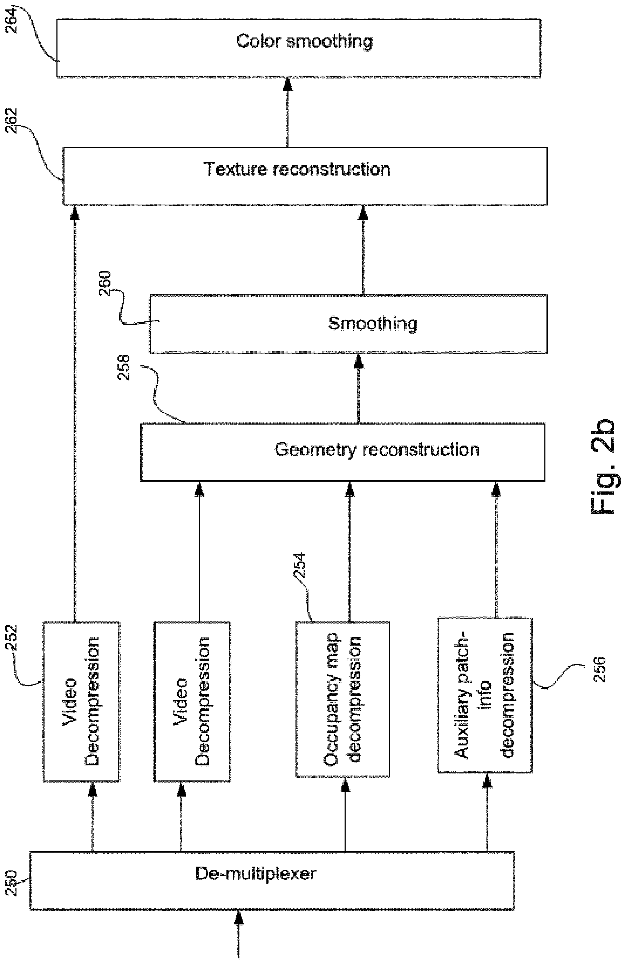

Figures 2a and 2b illustrate an overview of exemplified compression/ decompression processes of Point Cloud Coding (PCC) according to MPEG standard. MPEG Video-Based Point Cloud Coding (V-PCC; MPEG N18892, a.k.a. ISO/IEC JTC 1/SC 29/WG 11 "V-PCC Codec Description") discloses a projection-based approach for dynamic point cloud compression. For the sake of illustration, some of the processes related to video-based point cloud compression (V-PCC) compression/decompression are described briefly herein. For a comprehensive description of the model, a reference is made to MPEG N18892.

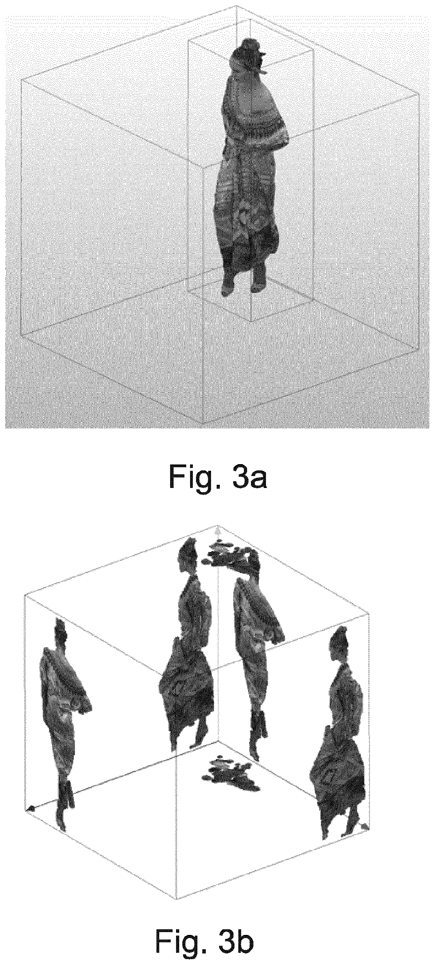

The process starts with an input frame representing a point cloud frame 200 that is provided for patch generation 202, geometry image generation 206 and texture image generation 208. Each point cloud frame represents a dataset of points within a 3D volumetric space that has unique coordinates and attributes. An example of a point cloud frame is shown on Figure 3a.

The patch generation process 202 decomposes the point cloud frame 200 by converting 3d samples to 2d samples on a given projection plane using a strategy that provides the best compression. The patch generation process 202 aims at decomposing the point cloud into a minimum number of patches with smooth boundaries, while also minimizing the reconstruction error. In the V-PCC, the following approach is implemented.

First, the normal per each point is estimated and the tangent plane and its corresponding normal are defined per each point, based on the point's nearest neighbours $m$ within a predefined search distance. A K-D tree is used to separate the data and find neighbours in a vicinity of a point $p_i$ and a barycenter $c = \bar{p}$ of that set of points is used to define the normal. The barycenter c is computed as follows:

$$c = \bar{p} = \frac{1}{m}\sum_{i=1}^{m} p_i$$

The normal is estimated from eigen decomposition for the defined point cloud as:

$$\sum_{i=1}^{m}(p_i - \bar{p})(p_i - \bar{p})^T$$

Based on this information each point is associated with a corresponding plane of a point cloud bounding box. Each plane is defined by a corresponding normal $\vec{n}_{p_{idx}}$ with values:

- (1.0,0.0,0.0),
- (0.0, 1.0,0.0),
- (0.0, 0.0, 1.0),
- (-1.0,0.0, 0.0),
- (0.0, -1.0, 0.0),
- (0.0, 0.0, -1.0).

More precisely, each point is associated with the plane that has the closest normal (i.e., maximizes the dot product of the point normal $\vec{n}_{p_i}$ and the plane normal $\vec{n}_{p_{idx}}$.

$$\max_{p_{idx}}\{\vec{n}_{p_i} \cdot \vec{n}_{p_{idx}}\}$$

The sign of the normal is defined depending on the point's position in relationship to the "center". The projection estimation description is shown in Figure 3b.

The initial clustering is then refined by iteratively updating the cluster index associated with each point based on its normal and the cluster indices of its nearest neighbors. The next step consists of extracting patches by applying a connected component extraction procedure.

Patch info determined at patch generation 202 for the input point cloud frame 200 is delivered to patch packing 204, to geometry image generation 206, to texture image generation 208, to attribute smoothing (3D) 216 and to auxiliary patch info compression 218. The packing process aims at mapping the extracted patches onto a 2D grid while trying to minimize the unused space, and guaranteeing that every TxT (e.g., 16x16) block of the grid is associated with a unique patch. Herein, T is a user-defined parameter that is encoded in the bitstream and sent to the decoder.

V-PCC uses a simple packing strategy that iteratively tries to insert patches into a WxH grid. W and H are user defined parameters, which correspond to the resolution of the geometry/texture images that will be encoded. The patch location is determined through an exhaustive search that is performed in raster scan order. The first location that can guarantee an overlapping-free insertion of the patch is selected and the grid cells covered by the patch are marked as used. If no empty space in the current resolution image can fit a patch, then the height H of the grid is temporarily doubled and search is applied again. At the end of the process, H is clipped so as to fit the used grid cells.

The geometry image generation 206 and the texture image generation 208 are configured to generate geometry images and texture images. The image generation process exploits the 3D to 2D mapping computed during the packing process to store the geometry and texture of the point cloud as images. In order to better handle the case of multiple points being projected to the same pixel, each patch is projected onto two images, referred to as layers. More precisely, let H(u,v) be the set of points of the current patch that get projected to the same pixel (u, v). The first layer, also called the near layer, stores the point of H(u,v) with the lowest depth D0. The second layer, referred to as the far layer, captures the point of H(u,v) with the highest depth within the interval [D0, D0+$\Delta$], where $\Delta$ is a user-defined parameter that describes the surface thickness.

The generated videos have the following characteristics: geometry: WxH YUV420-8bit, where the geometry video is monochromatic, and texture: WxH YUV420-8bit, where the texture generation procedure exploits the reconstructed/smoothed geometry in order to compute the colors to be associated with the re-sampled points.

The geometry images and the texture images may be provided to image padding 212. The image padding 212 may also receive as an input an occupancy map (OM) 210 to be used with the geometry images and texture images. The padding process aims at filling the empty space between patches in order to generate a piecewise smooth image suited for video compression. V-PCC uses a simple padding strategy, which proceeds as follows:

- Each block of TxT (e.g., 16x16) pixels is processed independently.
- If the block is empty (i.e., all its pixels belong to empty space), then the pixels of the block are filled by copying either the last row or column of the previous TxT block in raster order.
- If the block is full (i.e., no empty pixels), nothing is done.
- If the block has both empty and filled pixels (i.e. a so-called edge block), then the empty pixels are iteratively filled with the average value of their non-empty neighbors.

The padded geometry images and padded texture images may be provided for video compression 214. The generated images/layers are stored as video frames and compressed using a video codec, such as High Efficiency Video Coding (HEVC) codec. The video compression 214 also generates reconstructed geometry images to be provided for smoothing 216, wherein a smoothed geometry is determined based on the reconstructed geometry images and patch info from the patch generation 202. The smoothed geometry may be provided to texture image generation 208 to adapt the texture images.

In the auxiliary patch information compression, the following meta data is encoded/decoded for every patch:

- Index of the projection plane

    o Index 0 for the normal planes (1.0, 0.0, 0.0) and (-1.0, 0.0, 0.0)
    o Index 1 for the normal planes (0.0, 1.0, 0.0) and (0.0, -1.0, 0.0)
    o Index 2 for the normal planes (0.0, 0.0, 1.0) and (0.0, 0.0, -1.0).

- 2D bounding box (u0, v0, u1, v1)
- 3D location (x0, y0, z0) of the patch represented in terms of depth $\delta0$, tangential shift s0 and bi-tangential shift r0. According to the chosen projection planes, ($\delta0$, s0, r0) are computed as follows:

    o Index 0, $\delta0$= x0, s0=z0 and r0 = y0
    o Index 1, $\delta0$= y0, s0=z0 and r0 = x0
    o Index 2, $\delta0$= z0, s0=x0 and r0 = y0

Also, mapping information providing for each TxT block its associated patch index is encoded as follows:

- For each TxT block, let L be the ordered list of the indexes of the patches such that their 2D bounding box contains that block. The order in the list is the same as the order used to encode the 2D bounding boxes. L is called the list of candidate patches.
- The empty space between patches is considered as a patch and is assigned the special index 0, which is added to the candidate patches list of all the blocks.
- Let I be index of the patch to which belongs the current TxT block and let J be the position of I in L. Instead of explicitly encoding the index I, its position J is arithmetically encoded instead, which leads to better compression efficiency.

The occupancy map consists of a binary map that indicates for each cell of the grid whether it belongs to the empty space or to the point cloud. Herein, one cell of the 2D grid produces a pixel during the image generation process. When considering an occupancy map as an image, it may be considered to comprise occupancy patches. Occupancy patches may be considered to have block-aligned edges according to the auxiliary information described in the previous section. An occupancy patch hence comprises occupancy information for a corresponding texture and geometry patches.

The occupancy map compression leverages the auxiliary information described in previous section, in order to detect the empty TxT blocks (i.e., blocks with patch index 0). The remaining blocks are encoded as follows.

The occupancy map could be encoded with a precision of a B0xB0 blocks. B0 is a user-defined parameter. In order to achieve lossless encoding, B0 should be set to 1. In practice B0=2 or B0=4 result in visually acceptable results, while significantly reducing the number of bits required to encode the occupancy map. The generated binary image covers only a single colour plane. However, given the prevalence of 4:2:0 codecs, it may be desirable to extend the image with "neutral" or fixed value chroma planes (e.g. adding chroma planes with all sample values equal to 0 or 128, assuming the use of an 8-bit codec).

The obtained video frame is compressed by using a video codec with lossless coding tool support (e.g., AVC, HEVC RExt, HEVC-SCC).

Occupancy map is simplified by detecting empty and non-empty blocks of resolution TxT in the occupancy map and only for the non-empty blocks we encode their patch index as follows:

- A list of candidate patches is created for each TxT block by considering all the patches that contain that block.
- The list of candidates is sorted in the reverse order of the patches.

For each block,

o If the list of candidates has one index, then nothing is encoded.
o Otherwise, the index of the patch in this list is arithmetically encoded.

The point cloud geometry reconstruction process exploits the occupancy map information in order to detect the non-empty pixels in the geometry/texture images/layers. The 3D positions of the points associated with those pixels are computed by levering the auxiliary patch information and the geometry images. More precisely, let P be the point associated with the pixel (u, v) and let ($\delta 0$, s0, r0) be the 3D location of the patch to which it belongs and (u0, v0, u1, v1) its 2D bounding box. P could be expressed in terms of depth $\delta$ (u, v), tangential shift s(u, v) and bi-tangential shift r(u, v) as follows:

$$\delta(u, v) = \delta 0 + g(u, v)$$

$$s(u, v) = s0 - u0 + u$$

$$r(u, v) = r0 - v0 + v$$

where g(u, v) is the luma component of the geometry image.

The smoothing procedure 216 aims at alleviating potential discontinuities that may arise at the patch boundaries due to compression artifacts. The implemented approach moves boundary points to the centroid of their nearest neighbors.

In the texture reconstruction process, the texture values are directly read from the texture images.

A multiplexer 220 may receive a compressed geometry video and a compressed texture video from the video compression 214, and optionally a compressed auxiliary patch information from auxiliary patch-info compression 218. The multiplexer 220 uses the received data to produce a compressed bitstream.

Figure 2b illustrates an overview of a de-compression process for MPEG Point Cloud Coding (PCC). A de-multiplexer 250 receives a compressed bitstream, and after demultiplexing, provides compressed texture video and compressed geometry video to video decompression 252. In addition, the de-multiplexer 250 transmits compressed occupancy map to occupancy map decompression 254. It may also transmit a compressed auxiliary patch information to auxiliary patch-info compression 256. Decompressed geometry video from the video decompression 252 is delivered to geometry reconstruction 258, as are the decompressed occupancy map and decompressed auxiliary patch information. The point cloud geometry reconstruction 258 process exploits the occupancy map information in order to detect the non-empty pixels in the geometry/texture images/layers. The 3D positions of the points associated with those pixels may be computed by leveraging the auxiliary patch information and the geometry images.

The reconstructed geometry image may be provided for smoothing 260, which aims at alleviating potential discontinuities that may arise at the patch boundaries due to compression artifacts. The implemented approach moves boundary points to the centroid of their nearest neighbors. The smoothed geometry may be transmitted to texture reconstruction 262, which also receives a decompressed texture video from video decompression 252. The texture values for the texture reconstruction are directly read from the texture images. The texture reconstruction 262 outputs a reconstructed point cloud for color smoothing 264, which further provides the reconstructed point cloud.

A V-PCC bitstream, containing coded point cloud sequence (CPCS), is composed of VPCC units carrying V-PCC parameter set (VPS) data, an atlas information bitstream, a 2D video encoded occupancy map bitstream, a 2D video encoded geometry bitstream, and zero or more 2D video encoded attribute bitstreams. A V-PCC bitstream can be stored in ISOBMFF container according to ISO/IEC 23090-10. Two modes are supported: single-track container and multi-track container.

Single-track container is utilized in the case of simple ISOBMFF encapsulation of a V-PCC encoded bitstream. In this case, a V-PCC bitstream is directly stored as a single track without further processing. Single-track should use sample entry type of 'vpe1' or 'vpeg'.

Under the 'vpe1' sample entry, all atlas parameter sets (as defined in ISO/IEC 23090-5) are stored in the setupUnit of sample entry. Under the 'vpeg' sample entry, the atlas parameter sets may be present in setupUnit array of sample entry, or in the elementary stream.

Multi-track container maps V-PCC units of a V-PCC elementary stream to individual tracks within the container file based on their types. There are two types of tracks in a multi-track container: V-PCC track and V-PCC component track. The V-PCC track is a track carrying the volumetric visual information in the V-PCC bitstream, which includes the atlas sub-bitstream and the atlas sequence parameter sets. V-PCC component tracks are restricted video scheme tracks which carry 2D video encoded data for the occupancy map, geometry, and attribute sub-bitstreams of the V-PCC bitstream. Multi-track should use for V-PCC track sample entry type of 'vpe1' or 'vpeg'.

Under the 'vpe1' sample entry, all atlas parameter sets (as defined in ISO/IEC 23090-5) shall be in the setupUnit array of sample entry. Under the 'vpeg' sample entry, the atlas parameter sets may be present in this array, or in the stream.

Consequently, V-PCC provides a procedure for compressing a time-varying volumetric scene/object by projecting 3D surfaces onto a number of pre-defined 2D planes, which may then be compressed using regular 2D video compression algorithms. The projection is presented using different patches, where each set of patches may represent a specific object or specific parts of a scene. Especially, V-PCC provides for efficient delivery of a compressed 3D point cloud object which can be viewed with six degrees of freedom (6DoF).

The second edition of OMAF, also referred to as OMAF version 2, includes support for overlays. In the OMAF context, an overlay may be defined as a video clip, an image or text that is superimposed on top of omnidirectional video or image. Overlays can be used for multiple purposes, including for example logos and advertisements.

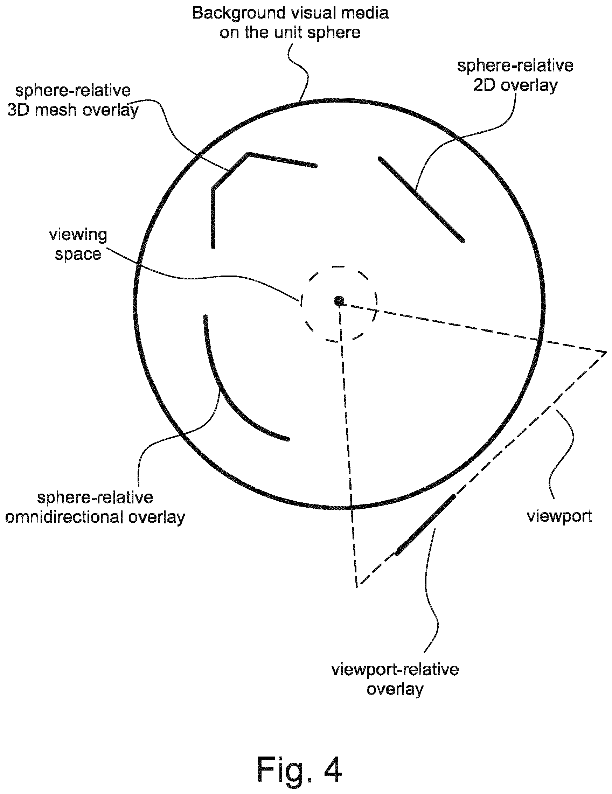

The appearance of overlays can be controlled flexibly in OMAF. Some basic concepts related to overlays are illustrated in Figure 4, which shows an equator-level cross section of the unit sphere and different types of overlays. Background visual media is defined as the omnidirectional video or image that is rendered on the unit sphere, and the term overlay source refers to the visual content displayed as an overlay.

OMAF v2 specifies the following types of overlays are specified in OMAF: sphere-relative 2D overlays, sphere-relative omnidirectional overlays, sphere-relative 3D mesh overlays, and viewport-relative overlays.

Sphere-relative 2D overlays: The overlay source is displayed on a plane of a given width and height. The center point of the plane is located at given spherical coordinates and distance from the center of the unit sphere, and the plane can be rotated by given yaw, pitch and roll angles.

Sphere-relative omnidirectional overlays: An omnidirectional projection, such as ERP, has been used for the overlay source. Sphere-relative omnidirectional overlays may, but need not, cover the entire sphere and are located at a given spherical location and distance from the center of the unit sphere.

Sphere-relative 3D mesh overlays: Both a 3D mesh and a mapping of the overlay source onto the 3D mesh are specified. The 3D mesh can consist of parallelograms having any rotation and being located at any position within the unit sphere.

Viewport-relative overlays are located on a given position within the viewport regardless of the viewing orientation. The rendering process projects the sphere-relative overlays and the background visual media onto the viewport, which is then superimposed by viewport-relative overlays. This is illustrated in Figure 4 through an isosceles triangle whose sides illustrate the horizontal field of view of the display and the base corresponds to viewport. Since viewports can be of different shape and size in different player devices, the top-left corner position, width, and height of a viewport-relative overlay are provided in per cents relative to the viewport dimensions.

OMAF enables two rendering modes for presenting sphere-relative overlays with background visual media. In conventional 3DoF rendering, a viewing position that is in the center of the unit sphere is used for projecting the sphere-relative overlays and the background visual media onto the viewport. In the second rendering mode, the viewing position is tracked and used for projecting the content onto the viewport. When second rendering mode is used with a head-mounted display, it may be referred to as head-tracked rendering. The second rendering mode enables viewing the overlays from different perspectives and peeking on the background appearing behind the overlays. Sphere-relative overlays can be placed at given distances from the center of the unit sphere, which is perceivable through motion parallax. Content authors can define a viewing space that specifies valid viewing positions around the center of the unit sphere. OMAF enables specifying the viewing space boundaries as a cuboid, a sphere, a cylinder, or an ellipsoid.

As discussed above, sphere-relative overlays are located at a given distance from the center of the unit sphere. A layering order can be given so that the player behavior is deterministic when several overlays are positioned at the same distance or when viewport-relative overlays overlap.

As discussed above, the overlay source can either be a video track or an image item, in which case the overlay consists of the entire decoded picture. Since some player devices might not be capable of running several video decoder instances simultaneously, it is also possible to pack overlays spatially with the background visual media. In that case, the overlay source is specified as a rectangle within the decoded picture area. Furthermore, it is possible to indicate that the overlay source is defined by the recommended viewport timed metadata track.

All the controls and properties discussed above are indicated in an OMAF file with the OverlayStruct syntax structure, which contains one or more overlay-specific SingleOverlayStruct syntax structures. The syntax structure also associated an identifier (overlay_id) for each overlay. SingleOverlayStruct is extensible, i.e., new controls or properties can be specified in future versions or amendments of OMAF. The presence of an overlay control of a specific type is indicated in a bit mask field within the SingleOverlayStruct. Each overlay control type has its own associated bit index in the bit mask field, and the presence of the overlay control is indicated by setting the bit of that bit index in the bit mask field equal to 1. The number of bytes in the bit mask field is indicated in the SingleOverlayStruct; thus, there is virtually no limit in specifying new types of overlay controls.

The controls and properties for overlays can be static, i.e. remain constant for the entire duration of the overlay. Alternatively, it is possible to specify a timed metadata track where the controls and properties are dynamically adjusted. For example, it is possible to move or resize an overlay as a function of time.

As described above, when viewing 3D content using an HMD, OMAFv2 enables overlay content rendering to respond to user's head motion (translation along X-axis, Y-axis and Z-axis). However, due to the inherent six degrees of freedom (6DoF) properties, a V-PCC object would be better suited for this scenario than 2D rectilinear content. Nevertheless, there is no support to have V-PCC or any 3D objects to be incorporated in the OMAFv2 content representation.

In the following, an enhanced method for including a 3D object, such as a V-PCC object, as an overlay in OMAFv2 will be described in more detail, in accordance with various embodiments. The 3D object may be specified, encoded, and/or decoded using its own coordinate system.

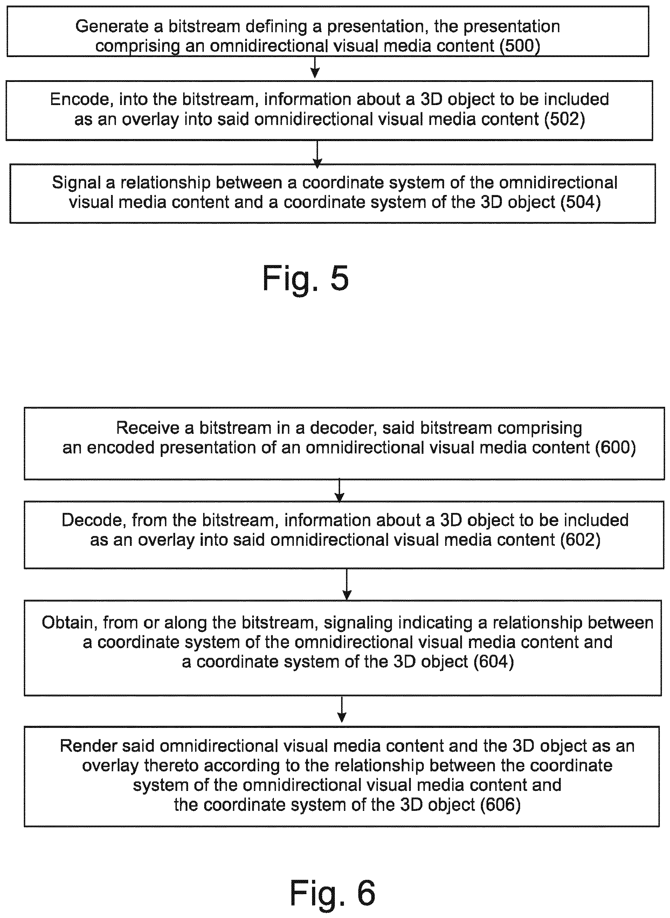

The method, which is disclosed in Figure 5, comprises generating (500) a bitstream defining a presentation, the presentation comprising an omnidirectional visual media content; encoding (502), into the bitstream, information about a three-dimensional (3D) object to be included as an overlay into said omnidirectional visual media content; and signaling (504), in or along the bitstream, a relationship between a coordinate system of the omnidirectional visual media content and a coordinate system of the 3D object.

Thus, a signalling data is provided that enables inclusion of a 3D object, such as a V-PCC object, as an overlay in omnidirectional visual media content, such as content according to OMAFv2. The signalling indicates the relationship between the omnidirectional background content origin (such as OMAFv2 origin) and the 3D object, such as a V-PCC object. The signalling data ensures that the 3D object is placed in a predefined place in the omnidirectional 3D space and it is presented to a user in correct orientation with respect to the omnidirectional space.

Another aspect relates to the operation of a decoder. Figure 6 shows an example of a decoding method comprising receiving (600) a bitstream in a decoder, said bitstream comprising an encoded presentation of an omnidirectional visual media content; decoding (602), from the bitstream, information about a three-dimensional (3D) object to be included as an overlay into said omnidirectional visual media content; obtaining (604), from or along the bitstream, signaling indicating a relationship between a coordinate system of the omnidirectional visual media content and a coordinate system of the 3D object; and rendering (606) said omnidirectional visual media content and the 3D object as an overlay thereto according to the relationship between the coordinate system of the omnidirectional visual media content and the coordinate system of the 3D object.

Thus, the decoder implemented in e.g. an HMD receives and decodes, besides the omnidirectional visual media content, but also information about a three-dimensional (3D) object to be included as an overlay into said omnidirectional visual media content. The signaling sent in or along the bitstream indicating a relationship between a coordinate system of the omnidirectional visual media content and a coordinate system of the 3D object, and based on this relationship, the decoder renders omnidirectional visual media content and the 3D object as an overlay thereto. Thus, the renderer takes into account the information about the coordinate system signalled in or along the bitstream or uses the default coordinate system of the 3D object, such as the V-PCC object, if there is no explicit signalling. Consequently, the omnidirectional visual media content player is made aware about both coordinate systems in order to perform the necessary spatial alignment, e.g. by performing the necessary translation/rotation/etc.

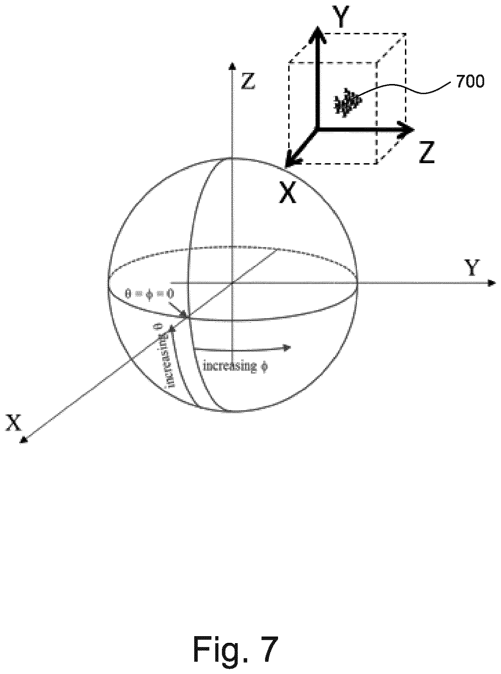

Figure 7 illustrates the difference between the coordinate system of a point cloud compressed (PCC) object and the OMAF coordinate system. A PCC object 700 is located at certain x-, y- and z-coordinates of a Cartesian coordinate system, while in the OMAF coordinate system, the viewer is located at the origin of a unit sphere. The y- and z-coordinates of the PCC object coordinate system and the OMAF coordinate system are in complementary directions.

According to an embodiment, said relationship is configured to be determined as a mapping of an up and a front direction of the coordinate system of the 3D object to an up and a front direction of the coordinate system of the omnidirectional visual media content.

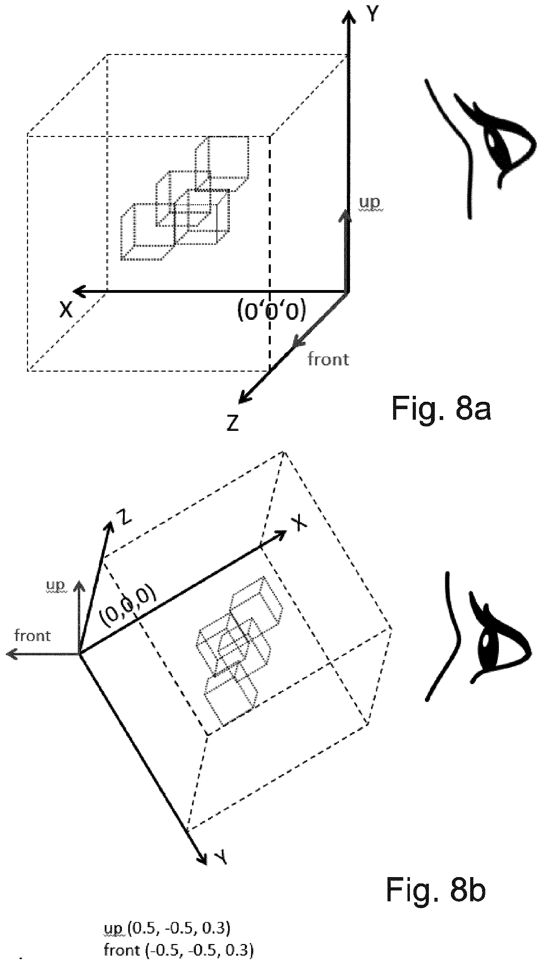

Thus, starting from the default up and front directions of the current viewport of the omnidirectional visual media content, said relationship enables to align the y- and z-axis of the the PCC object coordinate system as desired. Figure 8a shows an example, where the default up and front directions of the viewport are aligned with Y and Z axis of the PCC coordinate system, respectively. This may be considered as the default alignment, unless nothing else is signalled.

Figure 8b shows another example, where the PCC object is provided with adjusted Y and Z axis, thereby rotating the PCC object in relation to the up and front directions of the viewport. In this case, non-default up and front coordinates of PCC object are provided by another means, e.g. by a SEI message defined in V-PCC specification. In such cases, the signalled up and front axis should be aligned with the OMAFv2 up and front.

According to an embodiment, said relationship is configured to be determined as a mapping of a pivot point of the 3D object to the coordinate system of the omnidirectional visual media content.

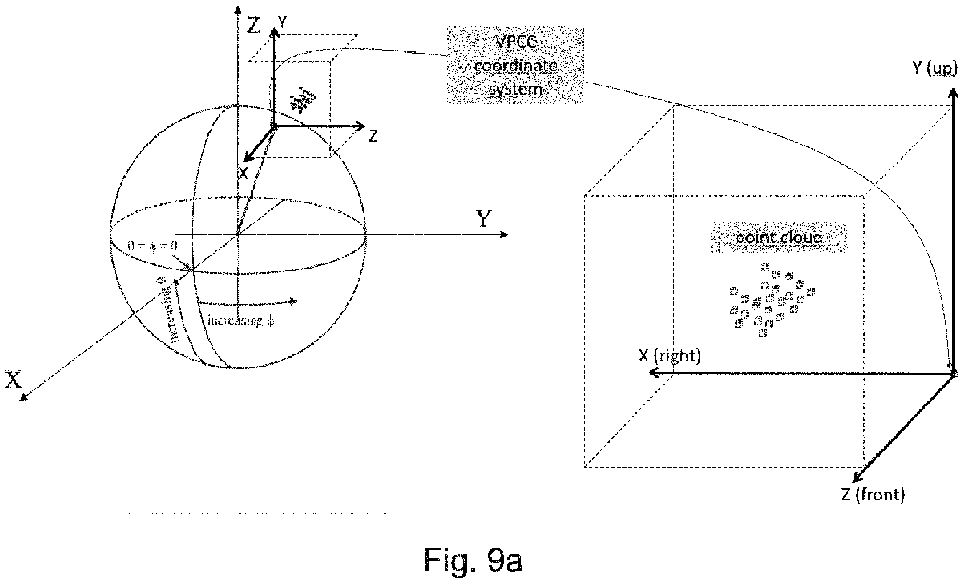

Thus, an alternative or an additional way of defining the rotation of the PCC object is provided. Again, a default pivot point locating at origin of the PCC coordinate system, as shown in Figure 9a, may be considered as the default alignment, unless nothing else is signalled.

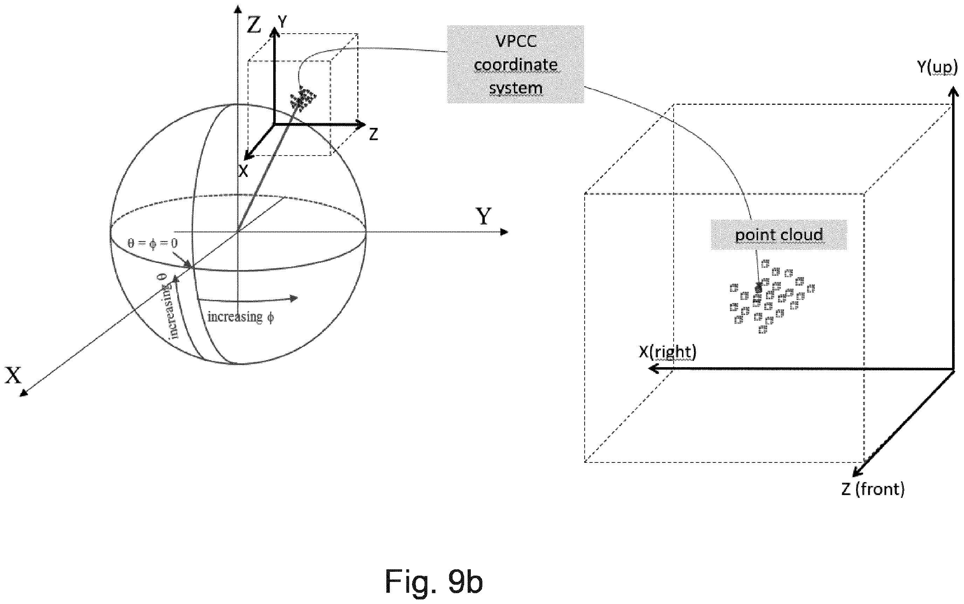

Figure 9b shows another example, where the pivot point of the PCC object is located at a spatial offset from the origin of PCC coordinate system, in this case in the middle of the PCC object. The non-default pivot point may be indicated e.g. by a SEI message defined in V-PCC specification.

According to an embodiment, said signaling is configured to be provided in at least one control structure of overlay control structures for the omnidirectional visual media content.

The support for V-PCC content in OMAFv2 may be implemented as an extension to the OMAFv2 overlay ISOBMFF definitions. Therefore, new overlay control structure(s) may be included overlay control structure definition list (Table 1) e.g. as follows: (where N and N+1 are bit indices that were previously reserved for future use)

Table 1.

| Bit index | Clause in this document | Description |
|---|---|---|
| ... | ... | ... |
| N | | Parameters for sphere-relative V-PCC overlay |
| N+1 | | Parameters for 3D User locked V-PCC overlay |

Thus, new overlay control structures may be defined for parameters for sphere-relative V-PCC overlay and parameters for 3D User locked V-PCC overlay.

The new control structure "Sphere-relative V-PCC Overlay" may be defined as follows:

```
aligned(8) class SphereRelativeVPCCOverlay() {
        SphereRegionStruct(1) ;
        unsigned int(1) timeline_change_flag;
        unsigned int(1) no_translation_flag;
        bit(6) reserved = 0;
        signed int(32) volume_scaling_factor;
        signed int(32) overlay_rot_yaw;
        signed int(32) overlay_rot_pitch;
        signed int(32) overlay_rot_roll;
        unsigned int(16) region_depth_minus1;
        unsigned int(32) unit_sphere_distance_in_mm; //
optional
}
```

SphereRegionStruct (1) indicates a sphere location for the pivot point of the V-PCC object that is used, together with the other information, to determine where the overlay is placed and displayed in 3D space. centre_tilt shall be equal to 0. The sphere region represented by SphereRegionStruct () shall be specified by four great circles.

For the SphereRegionStruct (1) included in the SphereRelative2DOverlay, interpolate shall be equal to 0.

timeline_change_flag equal to 1 specifies that the overlay content playback shall pause if the overlay is not in the user's current viewport, and when the overlay is back in the user's viewport the overlay content playback shall resume with the global presentation timeline of the content. The content in the intermediate interval is skipped.

timeline_change_flag equal to 0 specifies that the overlay content playback shall pause if the overlay is not in the user's current viewport, and when the overlay is back in the user's viewport the overlay content playback resumes from the paused sample. This prevents loss of any content due to the overlay being away from the user's current viewport.

no_translation_flag equal to 1 indicates that the translation from V-PCC coordinate origin to the V-PCC object pivot is equal to zero. In other words, V-PCC object pivot is at (0,0,0) of V-PCC coordinate system, as shown in Figure 8a. This is useful to ensure that the V-PCC object is rendered in the vicinity of the specified location in the OverlayStruct () .

no_translation_flag equal to 0 indicates that the pivot point can be different from the V-PCC coordinate origin, as shown in Figure 8b, and is signaled by appropriate SEI message, such as the V-PCC presentation information SEI message.

volume_scaling_factor is a fixed-point 16.16 value for scaling the V-PCC object after decoding and before rendering in OMAF as overlay. This enables the content creator to control how a V-PCC asset is viewed in OMAF.

According to another embodiment, volume_scaling_factor may be an array of 3 values of the same type which correspond to scales in X,Y and Z coordinate axis of the V-PCC content. Value 0 for any axis may or may not be allowed.

overlay_rot_yaw, overlay_rot_pitch and overlay_rot_roll specify the rotation of the V-PCC object along V-PCC coordinate system axes where center of rotation is indicated by V-PCC object pivot point. The yaw axis has its origin at the center of rotation and is directed same as up axis of V-PCC coordinate system. The pitch axis has its origin at the center of rotation and is directed to the right (side-to-side) axis of V-PCC coordinate system. The roll axis has its origin at the center of rotation and is directed same as front axis of V-PCC coordinate system.

region_depth_minus 1 indicates the depth (z-value) of the pivot point of the V-PCC object. The depth value is the norm of the normal vector of the overlay region. region_depth_minus1 + 1 specifies the depth value relative to a unit sphere in units of $2^{-16}$.

According to another embodiment, region_depth_minus1 indicates the depth (z-value) of the origin of the V-PCC coordinate system. The depth value is the norm of the normal vector of the overlay region. region_depth_minus1 + 1 specifies the depth value relative to a unit sphere in units of $2^{-16}$.

unit_sphere_distance_in_mm specifies a distance, in millimeters, corresponding to the radius of the unit sphere. The value should be used for stereoscopic rendering of the content on the unit sphere together with overlaying content and for deriving suitable binocular disparity for overlaying visual tracks or image items for which the depth is indicated relative to the unit sphere. When present multiple times for the same background visual media, the value of all instances of unit_sphere_distance_in_mm shall be identical. The presence of unit_sphere_distance_in_mm is optional.

The values of region_depth_minus1 and volume_scaling_factor should be chosen such that the V-PCC object for the entire sequence is at a distance which is less than the unit sphere, in order to ensure that no V-PCC object in the V-PCC sequence is occluded by the background visual media.

According to an embodiment, the control structure comprises explicit signaling of the pivot point of the 3D object. Such explicit signaling may be implemented, for example, as follows:

```
aligned(8) class SphereRelativeVPCCOverlay() {
        SphereRegionStruct(1) ;
        unsigned int(1) timeline_change_flag;
        unsigned int(1) no_translation_flag;
        bit(5) reserved = 0;
        signed int(32) overlay_rot_yaw;
        signed int(32) overlay_rot_pitch;
        signed int(32) overlay_rot_roll;
        unsigned int(16) region_depth_minus1;
        unsigned int(32) unit_sphere_distance_in_mm; //
optional
        unsigned int(1) pivot_unit_type; // optional
        if(!no_translation_flag){
            if(pivot_unit_type){
                unsigned int(32) pivot_x_in_vpccunits;
                unsigned int(32) pivot_y_in_vpccunits;
                unsigned int(32) pivot_z_in_vpccunits;
            }
```

```
          if(!pivot_unit_type){
                unsigned int(32) pivot_x_in_mm;
                unsigned int(32) pivot_y_in_mm;
                unsigned int(32) pivot_z_in_mm;
          }    }
   }
```

Herein, pivot_unit_type is equal to 0, the pivot units are to be interpreted as millimeter units with 1 unit equal to $2^{-16}$mm.

pivot_unit_type is equal to 1, the pivot units are to be interpreted as VPCC units.

pivot_x_in_mm, pivot_y_in_rum, pivot _z_in_mm is the distance of the pivot point from the origin of V-PCC coordinate system.

According to an embodiment, the control structure includes at least one entire SEI message. Such inclusion of the entire SEI message(s), such as presentation information SEI message and/or geometry transformation SEI message, within the control structure may be implemented, for example, as follows:

```
aligned(8) class SphereRelativePCCOverlay() {
      SphereRegionStruct(1);
      unsigned int(1) timeline_change_flag;
      unsigned int(1) no_translation_flag;
      bit(6) reserved = 0;
      signed int(32) overlay_rot_yaw;
      signed int(32) overlay_rot_pitch;
      signed int(32) overlay_rot_roll;
      unsigned int(16) region_depth_minusl;
      unsigned int(32) unit_sphere_distance_in_mm; //
optional
      if(!no_translation_flag){
            geometry_information();
            presentation_infromation();
      } else {
            geometry_transformation();
            presentation_information();
            unsigned int(32) pivot_x_in_mm = 0;
            unsigned int(32) pivot_y_in_mm = 0;
            unsigned int(32) pivot_z_in_mm = 0;
      }
  }
```

According to an embodiment, the pivot point information of the 3D object may also be signalled as follows:

```
aligned(8) class SphereRelativePCCOverlay() {
      SphereRegionStruct(1);
      unsigned int(1) timeline_change_flag;
      unsigned int(1) no_translation_flag;
      bit(6) reserved = 0;
      signed int(32) overlay_rot_yaw;
      signed int(32) overlay_rot_pitch;
      signed int(32) overlay_rot_roll;
      unsigned int(16) region_depth_minusl;
      unsigned int(32) unit_sphere_distance_in_mm; //
optional
      if(!no_translation_flag){
            unsigned int(1) pivot;
            bit(7) reserved = 0;
            if(!pivot) {
                unsigned int(32) pivot_x;
                unsigned int(32) pivot_y;
                unsigned int(32) pivot_z;
            }
      }
  }
```

Herein, pivot indicates the position of the pivot point. When pivot equals to 0 the pivot point is the center of V-PCC object. When pivot equals to 1 pivot point is explicitly signaled by pivot_x, pivot_y, pivot_z.

pivot_x, pivot_y, pivot_z is the distance of the pivot point from the origin of V-PCC coordinate system in V-PCC coordinate system units.

According to an embodiment, the pivot point information of the 3D object may also be signalled another control structure. Thus, the new control structure "3D User Locked Overlay" as disclosed by the bit index 13 in Table 1 may be defined as follows:

```
aligned(8) class 3DUserLockedOverlay() {
        signed int(32) centre_azimuth;
        signed int(32) centre_elevation;
        unsigned int(1) timeline_change_flag;
        unsigned int(1) no_translation_flag;
        bit(6) reserved = 0;
        signed int(32) overlay_rot_yaw;
        signed int(32) overlay_rot_pitch;
        signed int(32) overlay_rot_roll;
        unsigned int(16) region_depth_minusl;
        unsigned int(32) unit_sphere_distance_in_mm; //
optional
        if(!no_translation_flag){
            unsigned int(1) pivot;
            bit(7) reserved = 0;
            if(!pivot) {
                unsigned int(32) pivot_x;
                unsigned int(32) pivot_y;
                unsigned int(32) pivot_z;
            }
        }
    }
```

Herein, centre_azimuth and centre_elevation indicates the offset orientation for the pivot point of the V-PCC object and the center of the user's viewport. This is used to determine where the overlay is placed relative to the user's viewing orientation. centre_tilt shall be equal to 0. The sphere region represented by SphereRegionStruct () shall be specified by four great circles.

pivot indicates the position of the pivot point. When pivot equals to 0 the pivot point is the center of V-PCC object. When pivot equals to 1 pivot point is explicitly signaled by pivot_x, pivot_y, pivot_z.

pivot_x, pivot_y, pivot_z is the distance of the pivot point from the origin of V-PCC coordinate system in V-PCC coordinate system units.

According to an embodiment, further signaling is provided, along a container associated with the 3D object, that said 3D object is intended as an overlay into said omnidirectional visual media content, wherein signaling comprises at least an identification of source media and rendering properties of the overlay. Thus, the container associated with the 3D object, such as a V-PCC track or item, may be extended to contain information comprises at least an identification of source media and rendering properties of the overlay, thereby enabling the carriage of V-PCC content as an overlay into said omnidirectional visual media content. The V-PCC track may, for example, contain signaling to indicate that it is an OMAFv2 overlay by carrying an OverlayConfigBox 'ovly', which contains the OverlayStruct() describing the source media and the rendering properties of the overlay.

According to an embodiment, said signalling is static metadata of the overlay in a track associated with the 3D object. Such signalling may be implemented, for example, as follows:

| | |
|---|---|
| Box Type: | 'ovly' |
| Container: | VolumetricVisualSampleEntry or VPCCElementaryStreamSampleEntry or VPCCSampleEntry |
| Mandatory: | No |
| Quantity: | Zero or one |

OverlayConfigBox is defined to store the static metadata of the V-PCC overlays contained in this V-PCC track. V-PCC track may indicate a multi-track V-PCC storage or single-track V-PCC storage. The overlay may be indicated in VolumetricVisualSampleEntry that may be of type 'vpel', 'vpeg' when it is single track container (V-PCC elementary stream track) or 'vpcl', 'vpcg' when it is multi track container (ovly box is in atlas data track).

```
aligned(8) class OverlayConfigBox extends FullBox('ovly', 0,
0) {
        OverlayStruct() ;
}
```

According to an embodiment, said signalling is static metadata of the overlay in an item associated with the 3D object. Such signalling may be implemented, for example, as follows:

| | |
|---|---|
| Box type: | 'ovly' |
| Property type: | Descriptive item property |
| Container: | ItemPropertyContainerBox or VPCCUnitHeaderProperty |
| Mandatory: | No |
| Quantity: | Zero or one |

OverlayConfigProperty is defined to store the static metadata of the V-PCC overlays contained in the associated V-PCC item.

```
aligned(8) class OverlayConfigProperty extends
ItemFullProperty ('ovly', 0, 0) {
        OverlayStruct() ;
}
```

According to an embodiment, said signalling is dynamic metadata of the overlay in a track reference pointing to one or more tracks associated with the 3D object. Such signalling may be implemented, for example, such that the overlay timed metadata track is linked to the respective overlay volumetric visual media tracks by utilizing the ' cdsc ' track reference. In case of V-PCC overlays, 'cdsc' reference may be pointing a single V-PCC elementary stream track or a multi-track V-PCC track. The volumetric visual media track shall be the one with sample entry type 'vpe1' or 'vpeg' in case of single-track containers (e.g. V-PCC elementary stream tracks). In case of V-PCC overlays with multi-track container (V-PCC tracks), the linked volumetric visual media track shall be 'vpc1' or 'vpcg'.

A ' dyol' timed metadata track is needed if V-PCC SEI message information is included in the OverlayStruct () AND the included information is changing, even ifoverlay_rot_yaw, overlay_rot_pitch, overlay_rot_roll, region _depth_minus1, unit_sphere_distance_in_mm is not changing.

According to another embodiment, an EntitytoGroupBox of type 'ovbg' may be used to group V-PCC overlay tracks, items, OMAF overlays and OMAF background tracks and items. Any one of the following V-PCC contents could be present in such an entity to group box:

- Multi-track V-PCC content's V-PCC track id
- Single-track V-PCC content's V-PCC elementary stream track id
- V-PCC item's item id
- Any other entity group id which is comprised of a combination of the above-mentioned content types and any other visual media tracks such as OMAF background tracks. This may mean that a unified id space is utilized for track, item and entity group ids.

According to an embodiment, the V-PCC object could be carried in a 3GPP Framework for Live Uplink Streaming (FLUS) or Multimedia Telephony Service over IMS (MTSI) or 5G Media Streaming, Packet-Switched Streaming (5GMS (PSS)) or Multimedia Broadcast Multicast Services (MBMS) or any real-time multimedia transmission/reception overlay during a

- Real-time uni-directional streaming of omnidirectional video;
- Real-time uplink streaming (FLUS) session with uni-directional omnidirectional video;
- Real-time bi-directional low-delay session (MTSI) with bi-directional omnidirectional video;
- 5GMS (or PSS) or MBMS streaming/broadcast/multicast session with uni-directional omnidirectional video.

The V-PCC object could be carried as an overlay

- Of a 2D video stream with limited field of view to be watched with a mobile device.
- Of an omnidirectional video stream to be watched with a head mounted display or a mobile device.

If the V-PCC object source is live encoded according to the MPEG standard, there may still be the need of transmitting the above parameters in order to align the coordinate systems and pivot point to the same system.

For all the above cases described in this extension section, the transport of the relevant information fields as defined above (even just a subset) occurs via the appropriate representation format such as XML/JSON over suitable ISO/OSI transport protocol, such as the HTTP, RTP/RTCP, SIP, RTSP and alike.

For the described cases, the client is aware about both the coordinate systems of V-PCC and omnidirectional video content to perform the necessary spatial alignment by performing the necessary translation/rotation/etc.

Some examples and embodiments have been described above with reference to specific syntax and semantics. It needs to be understood that the examples and embodiments similarly apply to any similar syntax structures. For example, examples or embodiments apply similarly when some syntax elements are absent, or the order of syntax elements differs.

Two or more of the embodiments as described above may be combined, and they may be introduced as one or more indicators in any suitable syntax structure.

Consequently, the embodiments as described herein provides signaling that enables to including a 3D object, such as a V-PCC object, as an overlay to an omnidirectional visual media content, such as OMAFv2. Moreover, the signalling provides the omnidirectional visual media content player, such as an HMD, with such information that it enables to spatially align the coordinate system of the omnidirectional visual media content and the coordinate system of the 3D object in desire manner.

The embodiments relating to the encoding aspects may be implemented in an apparatus comprising: means for generating a bitstream defining a presentation, the presentation comprising an omnidirectional visual media content; means for encoding, into the bitstream, information about a three-dimensional (3D) object to be included as an overlay into said omnidirectional visual media content; and means for signaling, in or along the bitstream, a relationship between a coordinate system of the omnidirectional visual media content and a coordinate system of the 3D object.

The embodiments relating to the encoding aspects may likewise be implemented in an apparatus comprising at least one processor and at least one memory, said at least one memory stored with computer program code thereon, the at least one memory and the computer program code configured to, with the at least one processor, cause the apparatus at least to perform: generate a bitstream defining a presentation, the presentation comprising an omnidirectional visual media content; encode, into the bitstream, information about a three-dimensional (3D) object to be included as an overlay into said omnidirectional visual media content; and signal, in or along the bitstream, a relationship between a coordinate system of the omnidirectional visual media content and a coordinate system of the 3D object.

The embodiments relating to the decoding aspects may be implemented in an apparatus comprising means for means for receiving a bitstream in a decoder, said bitstream comprising an encoded presentation of an omnidirectional visual media content; means for decoding, from the bitstream, information about a three-dimensional (3D) object to be included as an overlay into said omnidirectional visual media content; means for obtaining, from or along the bitstream, signaling indicating a relationship between a coordinate system of the omnidirectional visual media content and a coordinate system of the 3D object; and means for rendering said omnidirectional visual media content and the 3D object as an overlay thereto according to the relationship between the coordinate system of the omnidirectional visual media content and the coordinate system of the 3D obj ect.

The embodiments relating to the decoding aspects may likewise be implemented in an apparatus comprising at least one processor and at least one memory, said at least one memory stored with computer program code thereon, the at least one memory and the computer program code configured to, with the at least one processor, cause the apparatus at least to perform: receive a bitstream in a decoder, said bitstream comprising an encoded presentation of an omnidirectional visual media content; decode, from the bitstream, information about a three-dimensional (3D) object to be included as an overlay into said omnidirectional visual media content; obtain, from or along the bitstream, signaling indicating a relationship between a coordinate system of the omnidirectional visual media content and a coordinate system of the 3D object; and render said omnidirectional visual media content and the 3D object as an overlay thereto according to the relationship between the coordinate system of the omnidirectional visual media content and the coordinate system of the 3D object.

Such apparatuses may comprise e.g. the functional units disclosed in any of the Figures 1, 2a and 2b for implementing the embodiments.

In the above, some embodiments have been described with reference to encoding. It needs to be understood that said encoding may comprise one or more of the following: encoding source image data into a bitstream, encapsulating the encoded bitstream in a container file and/or in packet(s) or stream(s) of a communication protocol, and announcing or describing the bitstream in a content description, such as the Media Presentation Description (MPD) of ISO/IEC 23009-1 (known as MPEG-DASH) or the IETF Session Description Protocol (SDP). Similarly, some embodiments have been described with reference to decoding. It needs to be understood that said decoding may comprise one or more of the following: decoding image data from a bitstream, decapsulating the bitstream from a container file and/or from packet(s) or stream(s) of a communication protocol, and parsing a content description of the bitstream,

In the above, where the example embodiments have been described with reference to an encoder or an encoding method, it needs to be understood that the resulting bitstream and the decoder or the decoding method may have corresponding elements in them. Likewise, where the example embodiments have been described with reference to a decoder, it needs to be understood that the encoder may have structure and/or computer program for generating the bitstream to be decoded by the decoder.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. A method for encoding comprising:

   generating a bitstream defining a presentation, the presentation comprising an omnidirectional visual media content;
   encoding, into the bitstream, information about a three-dimensional (3D) object to be included as an overlay into said omnidirectional visual media content; and
   signaling, in or along the bitstream, a relationship between a coordinate system of the omnidirectional visual media content and a coordinate system of the 3D object.

2. An apparatus for encoding comprising:

   means for generating a bitstream defining a presentation, the presentation comprising an omnidirectional visual media content;
   means for encoding, into the bitstream, information about a three-dimensional (3D) object to be included as an overlay into said omnidirectional visual media content; and
   means for signaling, in or along the bitstream, a relationship between a coordinate system of the omnidirectional visual media content and a coordinate system of the 3D object.

3. The apparatus according to claim 2, wherein said relationship is configured to be determined as a mapping of an up and a front direction of the coordinate system of the 3D object to an up and a front direction of the coordinate system of the omnidirectional visual media content.

4. The apparatus according to any of claims 2 and 3, wherein said relationship is configured to be determined as a mapping of a pivot point of the 3D object to the coordinate system of the omnidirectional visual media content.

5. The apparatus according to any of claims 2 to 4, wherein said signaling is configured to be provided in at least one control structure of overlay control structures for the omnidirectional visual media content.

6. The apparatus according to any of claims 2 to 5, further configured to signal, along a container associated with the 3D object, wherein said 3D object is intended as an overlay into said omnidirectional visual media content, and wherein the apparatus configured to signal comprises at least an identification of source media and rendering properties of the overlay.

7. The apparatus according to claim 6, wherein said signaling is static metadata of the overlay in a track associated with the 3D object.

8. The apparatus according to claim 6, wherein said signaling is static metadata of the overlay in an item associated with the 3D object.

9. The apparatus according to claim 6, wherein said signaling is dynamic metadata of the overlay in a track reference pointing to one or more tracks associated with the 3D object.

10. The apparatus according to any of claims 2 to 9, wherein said omnidirectional visual media content is generated according to MPEG Omnidirectional Media Format (OMAF) and the 3D object is encoded according to MPEG Video-Based Point Cloud Coding (V-PCC) specifications.

11. The apparatus according to any of claims 2 to 9, wherein said omnidirectional visual media content is generated according to 3GPP Framework for Live Uplink Streaming (FLUS) or Multimedia Telephony Service over IMS (MTSI) or 5G Media Streaming (5GMS) or Packet-Switched Streaming (PSS) or Multimedia Broadcast Multicast Services (MBMS) and the 3D object is encoded according to MPEG Video-Based Point Cloud Coding (V-PCC) specifications.

12. A method for decoding comprising:

receiving a bitstream in a decoder, said bitstream comprising an encoded presentation of an omnidirectional visual media content;
decoding, from the bitstream, information about a three-dimensional (3D) object to be included as an overlay into said omnidirectional visual media content; and
obtaining, from or along the bitstream, signaling indicating a relationship between a coordinate system of the omnidirectional visual media content and a coordinate system of the 3D object.

13. The method according to claim 12, further comprising:
rendering said omnidirectional visual media content and the 3D object as an overlay thereto according to the relationship between the coordinate system of the omnidirectional visual media content and the coordinate system of the 3D object.

14. An apparatus for decoding comprising:

means for receiving a bitstream in a decoder, said bitstream comprising an encoded presentation of an omnidirectional visual media content;
means for decoding, from the bitstream, information about a three-dimensional (3D) object to be included as an overlay into said omnidirectional visual media content; and
means for obtaining, from or along the bitstream, signaling indicating a relationship between a coordinate system of the omnidirectional visual media content and a coordinate system of the 3D object.

15. The apparatus according to claim 14, further comprising:
means for rendering said omnidirectional visual media content and the 3D object as an overlay thereto according to the relationship between the coordinate system of the omnidirectional visual media content and the coordinate system of the 3D object.

Fig. 1

Fig. 2a

Fig. 2b

Fig. 3a

Fig. 3b

Background visual media
on the unit sphere

sphere-relative
2D overlay

sphere-relative
3D mesh overlay

viewing
space

sphere-relative
omnidirectional overlay

viewport

viewport-relative
overlay

Fig. 4

Generate a bitstream defining a presentation, the presentation comprising an omnidirectional visual media content (500)

Encode, into the bitstream, information about a 3D object to be included as an overlay into said omnidirectional visual media content (502)

Signal a relationship between a coordinate system of the omnidirectional visual media content and a coordinate system of the 3D object (504)

# Fig. 5

Receive a bitstream in a decoder, said bitstream comprising an encoded presentation of an omnidirectional visual media content (600)

Decode, from the bitstream, information about a 3D object to be included as an overlay into said omnidirectional visual media content (602)

Obtain, from or along the bitstream, signaling indicating a relationship between a coordinate system of the omnidirectional visual media content and a coordinate system of the 3D object (604)

Render said omnidirectional visual media content and the 3D object as an overlay thereto according to the relationship between the coordinate system of the omnidirectional visual media content and the coordinate system of the 3D object (606)

# Fig. 6

Fig. 7

Fig. 8a

Fig. 8b

up (0.5, -0.5, 0.3)
front (-0.5, -0.5, 0.3)

Fig. 9a

Fig. 9b

Europäisches
Patentamt
European
Patent Office
Office européen
des brevets

# EUROPEAN SEARCH REPORT

Application Number

EP 21 15 6172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/229304 A2 (NOKIA TECHNOLOGIES OY [FI]) 5 December 2019 (2019-12-05) | 1-3,5-15 | INV.<br>H04N19/20<br>H04N19/597<br>H04N19/70 |
| Y | * paragraphs [0002], [0006], [0009] *<br>* paragraphs [0035], [0071] - [0074], [0091] - [0096] *<br>* paragraphs [0127], [0144] - [0145] * | 4 | |
| | ----- | | |
| X | US 2019/379856 A1 (HUR HYEJUNG [KR] ET AL) 12 December 2019 (2019-12-12) | 1-3,5-15 | |
| Y | * paragraphs [0008], [0009] *<br>* paragraphs [0287] - [0300], [0317]; figure 15 *<br>* paragraphs [0405], [0447] - [0453], [0469] - [0471], [0476] *<br>* paragraphs [0511], [0512]; claim 20; figure 53 * | 4 | |
| | ----- | | |
| Y | VIDANAPATHIRANA MADHAWA ET AL: "Real-time pedestrian mapping from camera view to world space",<br>2017 IEEE INTERNATIONAL CONFERENCE ON INDUSTRIAL AND INFORMATION SYSTEMS (ICIIS), IEEE,<br>15 December 2017 (2017-12-15), pages 1-6,<br>XP033324639,<br>DOI: 10.1109/ICIINFS.2017.8300352<br>ISBN: 978-1-5386-1674-1<br>[retrieved on 2018-02-21]<br>* Section III * | 4 | |
| | ----- | | |
| | -/-- | | |

TECHNICAL FIELDS
SEARCHED (IPC)

H04N

The present search report has been drawn up for all claims

| Place of search | Date of completion of the search | Examiner |
|---|---|---|
| The Hague | 7 July 2021 | Colesanti, Carlo |

EPO FORM 1503 03.82 (P04C01)

| | Europäisches Patentamt European Patent Office Office européen des brevets | | **EUROPEAN SEARCH REPORT** | | Application Number EP 21 15 6172 |
|---|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHMED HAMZA (INTERDIGITAL) ET AL: "[PCC Systems] On Playout Groups for V-PCC Components", 129. MPEG MEETING; 20200113 - 20200117; BRUSSELS; (MOTION PICTURE EXPERT GROUP OR ISO/IEC JTC1/SC29/WG11), , no. m52256 10 January 2020 (2020-01-10), XP030224849, Retrieved from the Internet: URL:http://phenix.int-evry.fr/mpeg/doc_end_user/documents/129_Brussels/wg11/m52256-v1-m52256.zip m52256 - On Playout Groups for V-PCC Components.docx [retrieved on 2020-01-10] * the whole document * | 10 | |
| A | "WD of ISO/IEC 23090-2 2nd edition OMAF", 124. MPEG MEETING; 20181008 - 20181012; MACAO; (MOTION PICTURE EXPERT GROUP OR ISO/IEC JTC1/SC29/WG11), , no. n17963 7 December 2018 (2018-12-07), XP030195495, Retrieved from the Internet: URL:http://phenix.int-evry.fr/mpeg/doc_end_user/documents/124_Macao/wg11/w17963.zip w17963-v1 OMAFv2 WD3.docx [retrieved on 2018-12-07] * Sections 7.12 and 7.13 * | 1-15 | **TECHNICAL FIELDS SEARCHED (IPC)** |

The present search report has been drawn up for all claims

| Place of search | Date of completion of the search | Examiner |
|---|---|---|
| The Hague | 7 July 2021 | Colesanti, Carlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 6172

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2021

| Patent document cited in search report | | Publication date | Patent family member(s) | | Publication date |
|---|---|---|---|---|---|
| WO 2019229304 | A2 | 05-12-2019 | CN | 112514398 A | 16-03-2021 |
| | | | EP | 3804335 A2 | 14-04-2021 |
| | | | KR | 20210016579 A | 16-02-2021 |
| | | | PH | 12020552061 A1 | 31-05-2021 |
| | | | US | 2021201855 A1 | 01-07-2021 |
| | | | WO | 2019229304 A2 | 05-12-2019 |
| US 2019379856 | A1 | 12-12-2019 | KR | 20190139795 A | 18-12-2019 |
| | | | US | 2019379856 A1 | 12-12-2019 |
| | | | WO | 2019235904 A1 | 12-12-2019 |

EPO FORM P0459

For more details about this annex : see Official Journal of the European Patent Office, No. 12/82